# EUROPEAN PATENT APPLICATION

(11) **EP 2 453 297 A2**
(43) Date of publication of application: **16.05.2012**
(21) Application number: 10808404.7
(22) Date of filing: 16.08.2010
(51) Int. Cl.: G02F 1/1333, G02F 1/1339, G02F 1/13

(54) **METHOD FOR CREATING A MULTI-DISPLAY DEVICE**

(30) Priority: 14.08.2009 KR 20090074981
(71) Applicant: Tovis Co. Ltd., Yeonsu-gu, Incheon 406-840 (KR)
(72) Inventor: KIM, Yong Beom, Incheon 406-736 (KR); KIM, Dong Hyun, Incheon 406-793 (KR)
(74) Representative: Manitz, Gerhart
(86) International application number: PCT/KR2010/005376
(87) International publication number: WO 2011/019255

(57) **Abstract**

A method for manufacturing a multi-display device by arranging adjacently a plurality of liquid crystal display panels includes: cutting the liquid crystal display panels along at least one edge to remove portions of the liquid crystal display panels respectively; arranging and fixing the liquid crystal display panels, in a state that a portion of the liquid crystal display panels is turned over, such that the cut edges face one another; removing a polarizer attached to a side of the liquid crystal display panel which will be turned over; and attaching a polarizer, which is of the same kind as a polarizer originally attached to the opposite side, to the side of the liquid crystal display panel from which the polarizer has been removed.

## Description

### [Field of the invention]

The present invention relates to a method for manufacturing a multi-display device.

### [Background Art]

A liquid crystal display device is widely used due to various advantages such as light-weight, thin thickness, low electric power consumption.

Generally, a liquid crystal display (LCD) includes two display panels and a liquid crystal layer disposed therebetween and having a dielectric anisotropy. An electric filed is formed in the liquid crystal layer, and a transmittance of light passing the liquid crystal layer is regulated by regulating amplitude of the electric field so as to obtain a desired image. Such a liquid crystal display is representative one of a flat panel display (FPD), and TFT-LCD which uses thin film transistor (TFT) as a switching element is widely used.

A plurality of display signal lines i.e., gate lines and data lines, a plurality of thin film transistors and pixel electrodes are formed on a lower display panel of the two display panels of the liquid crystal display panel, and a color filter and a common electrode are formed on a upper display panel.

Recently, a need for a liquid crystal display device having a large display area is increased. As a method for realizing a liquid crystal display device having a large display area, a size of a liquid crystal display panel can be enlarged, but there is a limitation in enlarging a size of the liquid crystal display panel and cost for manufacture is substantially increased.

In order to solve such problems of enlargement of the liquid crystal display panel and to realize a large display area of a liquid crystal display device, a multi-display device has been introduced which realizes a large display area by arranging adjacently a plurality of liquid crystal display panels.

In a case of a multi-display devices which is formed by combining a plurality of liquid crystal display panels, it is preferable that a width of a black bezel of respective liquid crystal panels is small to reduce a total length of an area, i.e., an area where an image is not displayed, where neighboring black bezels are adjacently disposed.

However, since a conventional liquid crystal display panel includes a black bezel of a specific width, a multi-display device has a problem in that an area where an image is not displayed between the neighboring liquid crystal display panels is relatively wide.

### [Detailed Description of the Invention]

### [Technical Problem]

The present invention has been made in an effort to provide a method for manufacturing a multi-display device in which a plurality of liquid crystal display panels can be adjacently arranged so as to minimize an area where an image is not displayed and so as to improve display quality.

### [Technical Solution]

In an exemplary embodiment of the present invention, a method for manufacturing a multi-display device by arranging adjacently a plurality of liquid crystal display panels includes: cutting the plurality of the liquid crystal display panels along at least one edge to remove portions of the plurality of the liquid crystal display panels respectively; arranging and fixing the plurality of the liquid crystal display panels, in a state that a portion of the liquid crystal display panels is turned over, such that the cut edges face one another; removing a polarizer attached to a side of the liquid crystal display panel which will be turned over; and attaching a polarizer, which is of the same kind as a polarizer originally attached to the opposite side, to the side of the liquid crystal display panel from which the polarizer has been removed.

In the removing portions of the liquid crystal display panels, the liquid crystal display panel may be cut along a right edge or a lower edge of the liquid crystal display panel where a driver for driving the liquid crystal display panel does not exist.

The plurality of liquid crystal display panels may be four, and in the removing portions of the liquid crystal display panel the four liquid crystal display panel may be respectively cut along both the right edge and the lower edge, and in the arranging the liquid crystal display panels the four liquid crystal display panels may be arranged horizontally and vertically in a two by two type. The liquid crystal display panel among the four liquid crystal display panels which is disposed at an upper left side may not be turned over, the liquid crystal display panel which is disposed at a upper right side may be turned over such that the right cut edge is disposed at a left side, the liquid crystal display panel which is disposed at a lower left side may be turned over such that the lower cut edge is disposed at an upper side, and the liquid crystal display panel which is disposed at a lower right side may be turned over such that the lower cut edge and the right cut edge are respectively disposed at an upper side and at a left side.

### [Advantageous Effects]

According to the present invention, by cutting edge portions of the liquid crystal display panels and adjacently arranging the liquid crystal display panels such that the cut edges face one another by turning over some liquid crystal display panels, a non-display area between the liquid crystal display panels can be minimized.

Furthermore, since polarizers of the turned-over liquid crystal display panel are substituted by new polarizers which are the same as polarizers which had been attached to opposite side of the liquid crystal display panel, an upper side of the turned-over liquid crystal display panel is covered with a hazed polarizer so as to improve visibility of the liquid crystal display panel.

### [Brief Description of Drawings]

FIG. 1 is a perspective view of a liquid crystal display panel to which a method for manufacturing a multi-display device according to an embodiment of the present invention may be applied.
FIG. 2 is an equivalent circuit diagram of one pixel of a liquid crystal display of FIG. 1.
FIG. 3 is a cross sectional view of a liquid crystal display panel of a state in which polarizers are stripped and then scribe lines are formed in a liquid crystal display panel of FIG. 1.
FIG. 4 is a drawing for showing deformations of an upper panel, a lower panel and a spacer during the process of breaking the upper panel and the lower panel by applying external force after forming scribe lines in a method of manufacturing a multi-display device according to an embodiment of the present invention.
FIG. 5 is a drawing for explaining a process for forming a sealant layer in a method for manufacturing a multi-display device according to an embodiment of the present invention.
FIG. 6 is a drawing showing substituting a polarizer of a liquid crystal display panel which is turned over in a method for manufacturing a multi-display device according to an embodiment of the present invention.
FIG. 7 and FIG. 8 are drawings showing a method for arranging a plurality of liquid crystal display panels in a method for manufacturing a multi-display device according to an embodiment of the present invention.

### [Best Mode]

The present invention will now be described more fully hereinafter with reference to the accompanying drawings, in which preferred embodiments of the invention are shown.

In the drawings, the thickness of layers, films, panels, regions, etc. are exaggerated for clarity. Like reference numerals designate like elements throughout the specification. It will be understood that when an element such as a layer, film, region or substrate is referred to as being "on" another element, it can be directly on the other element or intervening elements may also be present. In contrast, when an element is referred to as being "directly on" another element, there are no intervening elements present.

A method for manufacturing a multi-display device according to an embodiment of the present invention can be realized by partially cutting a plurality of liquid crystal display devices and by arranging adjacently the cut liquid display devices.

At first, a schematic structure of a liquid crystal display panel and a cutting method thereof will be described.

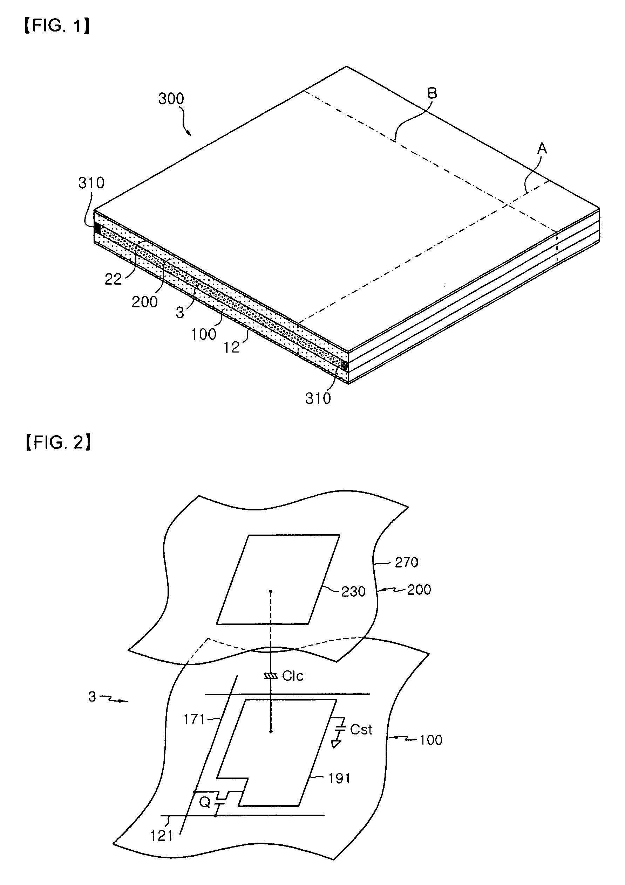

Referring to FIG. 1 to FIG. 3, liquid crystal panel assembly 300 to which a manufacturing method according to an embodiment of the present invention can be applied includes lower and upper panels 100 and 200 which face each other, and a liquid crystal layer 3 which is interposed between panels 100 and 200 and includes liquid crystal molecules which are aligned vertically or horizontally. Lower panel 100 may be referred to as a thin film transistor array panel, and upper panel 200 may be referred to as a color filter array panel.

Meanwhile, not shown in the drawings, liquid crystal display panel 300 may include a plurality of data lines which substantially extend in a column direction and are substantially parallel with each other, gate lines which substantially extend in a row direction and are substantially parallel with each other, and a plurality of pixels which are connected to these lines and are substantially arranged in a matrix shape.

A sealant 310 which is made of material for bonding two panels 100 and 200 and defines a space which is filled with liquid crystal and prevents leak of liquid crystal is formed at edges of two panels 100 and 200.

Polarizers 12 and 22 for polarizing light are respectively attached to outer surfaces of two panels 100 and 200. At this time, polarizer designated by reference numeral 22 which is attached to an outer surface of upper panel 200 which is seen directly by a user may be hazed to lead diffused reflection to improve visibility.

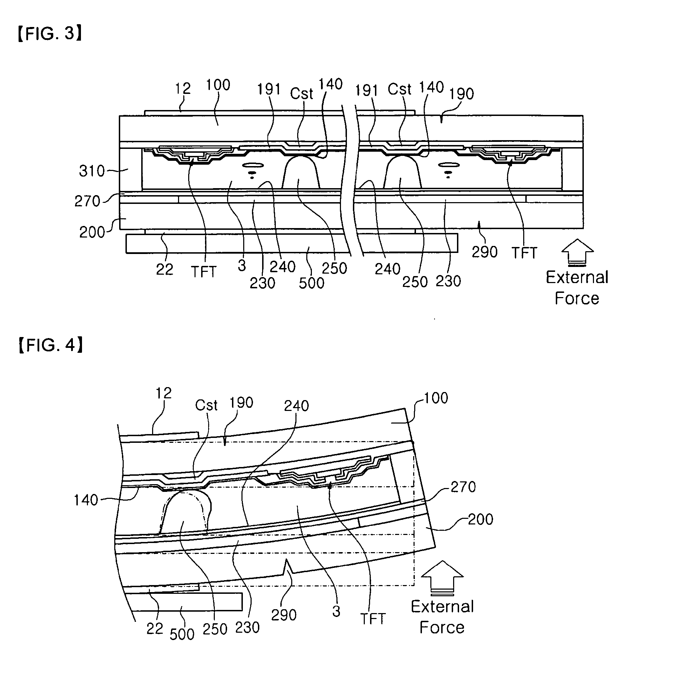

Referring to FIG. 3, a color filter 230 is formed on a lower surface of upper panel 200, a common electrode 270 is formed on a lower surface of color filter 230, and an upper alignment layer 240 is formed on a lower surface of common electrode 270.

Further, data lines 171, gate lines 121, pixel electrodes 191, thin film transistors TFT, or the like may be formed on an upper surface of lower panel 100, and a lower alignment layer 140 is formed thereon.

As shown in FIG. 3, a spacer 250 for maintaining a cell gap between upper panel 200 and lower panel 100 are interposed between upper panel 200 and lower panel 100.

Spacer 250 is formed by being patterned on a lower surface of upper alignment layer 240 of upper panel 200. That is, space 250 is fixed to upper alignment layer 240 and is pressurized by lower alignment layer 140.

Meanwhile, referring to FIG. 2, each pixel PX includes a switching element Q connected to data line 171 and gate line 121, and a liquid crystal capacitor Clc and a storage capacitor Cst connected thereto. If necessary, storage capacitor Cst may be omitted.

Switching element Q is a three terminal element such as a thin film transistor, etc. provided to lower panel 100, a control terminal thereof is connected to gate line 121, an input terminal thereof is connected to data line 171, and an output terminal thereof is connected to liquid crystal capacitor Clc and storage capacitor Cst.

Liquid crystal capacitor Clc has two terminals of a pixel electrode 191 of lower panel 100 and a common electrode 270 of upper panel 200, and liquid crystal layer 3 between two electrodes 191 and 270 serves as a dielectric material. Pixel electrode 191 is connected to switching element Q, and common electrode 270 is formed on the entire surface of upper panel 200 and a common voltage is applied thereto. Storage capacitor Cst assists liquid crystal capacitor Clc and maintains the data voltage applied to pixel electrode 191 for a predetermined period.

Meanwhile, for realizing color display, each pixel PX uniquely displays one of primary colors (spatial division) or each pixel PX alternately displays primary colors (temporal division) as time lapses, and a desired color is recognized by a spatial and temporal sum of primary colors. Examples of primary colors include three primary colors including red, green, and blue. FIG. 2 shows an example of a spatial division, and in this example, each pixel PX has a color filter 230 for one of the primary colors in a region of upper panel 200 corresponding to pixel electrode 191. Unlike FIG. 2, color filter 230 may be formed above or below pixel electrode 191 of lower panel 100.

Difference between data voltage applied to pixel electrode 191 and common voltage applied to common electrode 270 is represented as charge voltage, i.e., pixel voltage. Liquid crystal molecules are aligned differently depending on the magnitude of pixel voltage, and accordingly polarization of light passing through liquid crystal layer 3 varied, and variation of polarization causes variation of transmittance of light according to polarizers 12 and 22.

A method for manufacturing a liquid crystal display panel having a desired size by cutting and fabricating the above-described liquid crystal display panel will be described with reference to FIG. 3 to FIG. 5.

FIG. 3 is a cross sectional view of a liquid crystal display panel of a state in which polarizers are stripped and then scribe lines are formed in a liquid crystal display panel of FIG. 1.

Referring to FIG. 1 to FIG. 3, liquid crystal display panel 300 may be cut along a cutting line A or a cutting line B according to a desired size. The cutting line A is parallel with gate line 121, and the cutting line B is parallel with data line 171. Cutting method can be applied in the same way whenever liquid crystal display 300 is cut in both directions.

At first, polarizers 12 and 22 of liquid crystal display 300 are stripped by a predetermined width along a direction A or B. If polarizers 12 and 22 are stripped, lower panel 100 and upper panel 200 are exposed. Subsequently, a cutting position is selected by inspecting exposed lower and upper panels 100 and 200 with a microscope or the like.

Subsequently, a first scribe line 290 may be made approximately to a center depth of upper panel 200 along the selected cutting position using a diamond wheel, a diamond needle, a laser or the like, and then liquid crystal display 300 may be turned over and a second scribe line 190 may be made approximately to a center depth of lower panel 100.

Upper panel 200 and lower panel 100 are steadied for about 30 minutes in a state that the scribe lines are formed. Crack may be naturally formed along the scribe lines formed in two panels 100 and 200 during steadying, so air is introduced into liquid crystal layer 3, and if air is introduced into liquid crystal layer 300, leak of liquid crystal layer 3 is temporarily restricted by the introduced air.

After such a steadying step, if a predetermined force is applied from the outside, liquid crystal display 300 is cut along the scribe lines. A sealant 320 is covered on the cut portion so as to prevent leak of liquid crystal from the cut portion.

At this time, as shown in FIG. 3, liquid crystal display panel in which scribe lines 290 and 190 are formed is put on a work stage 500 in a state of being turned over such that lower panel 100 is positioned above upper panel 200, and in this state external force is applied to break lower panel 100 and upper panel along scribe lines 290 and 190.

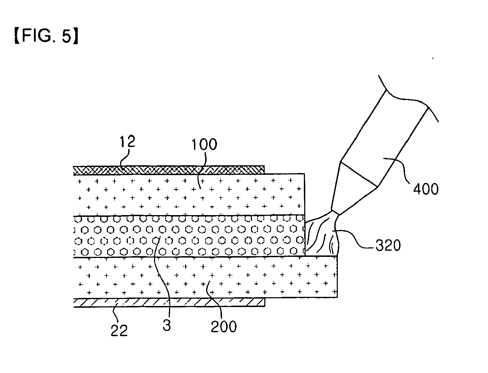

Subsequently, as shown in FIG. 5, after breaking upper panel 200 and lower panel 100 by applying external force in a direction as shown in FIG. 4, a sealant 320 enclosing the cut portion is formed using a dispenser 400 spraying the sealant 320.

By the above-described cutting method, a liquid crystal display panel can be cut along one or two edges of a liquid crystal display panel.

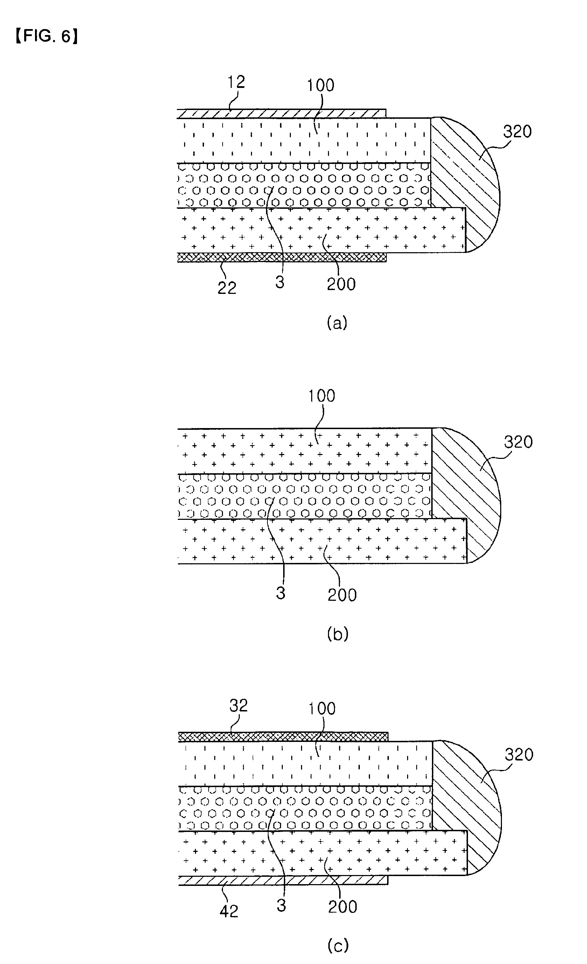

A method for manufacturing a multi-display device using the cut liquid display device will be described hereinafter with reference to FIG. 6 to FIG. 8.

At first, portions of a plurality of liquid display panels are removed by cutting along at least one edge thereof, and the cutting may be formed by a cutting method which is described above with reference to FIG. 1 to FIG. 5.

At this time, it is preferable to cut along a right edge or a lower edge of the liquid crystal display panel. The reason is that a source driver is mounted to an upper edge portion and a gate driver is mounted to a left edge portion and if a portion of a right edge or a lower edge is removed a portion of the liquid crystal display panel can be removed without damaging such drivers.

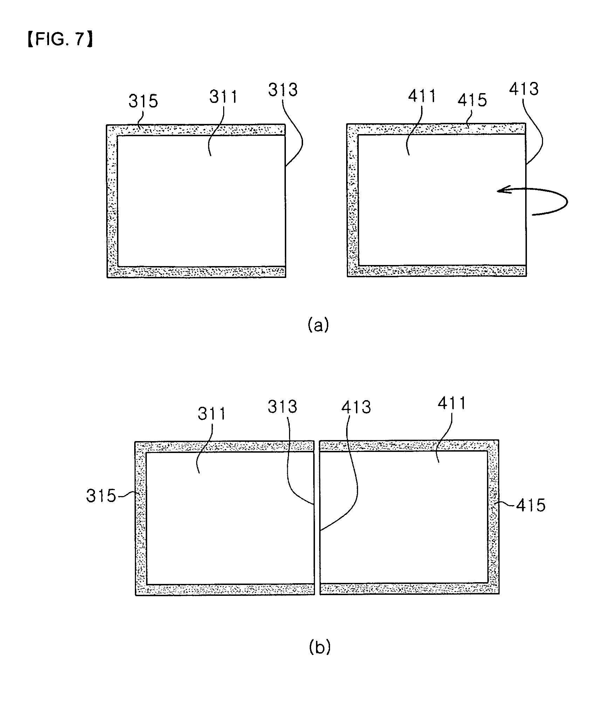

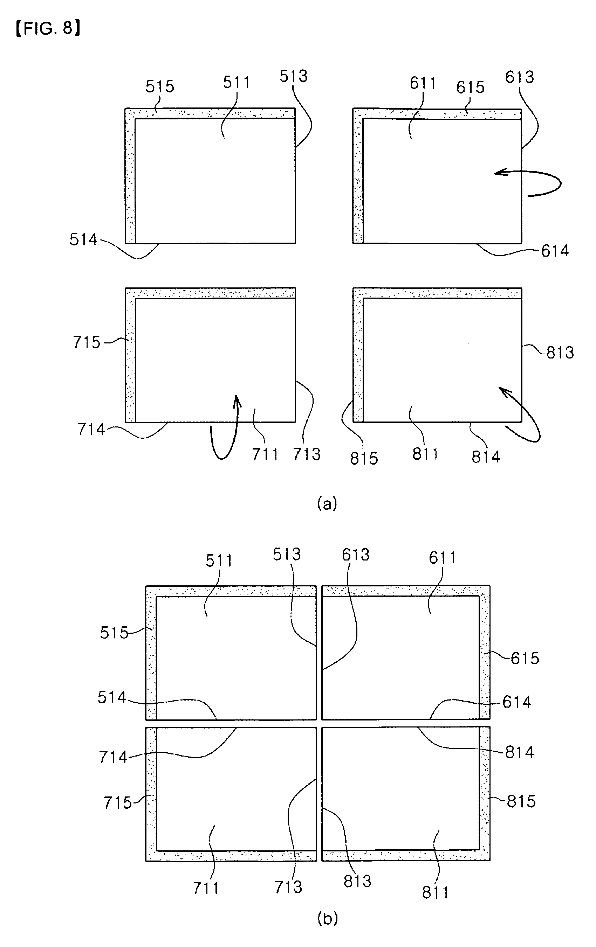

FIG. 7 shows a process for manufacturing a multi-display device by arranging adjacently two liquid crystal display panels, and FIG. 8 shows a process for manufacturing a multi-display device by arranging adjacently four liquid crystal display panels.

As shown in (a) of FIG. 7, in case of manufacturing a multi-display device in which two liquid crystal display panel are horizontally disposed, right edge portions of the two liquid crystal display panels 311 and 411 are respectively cut to form cut edges 313 and 413. Meanwhile, as shown in (a) of FIG. 8, in case of manufacturing a multi-display device in which four liquid crystal display panels 511, 611, 711 and 811 are disposed horizontally and vertically in a two by two type, right and lower edge portions of the four liquid crystal display panels 511, 611, 711 and 811 are respectively cut to form cut edges 513, 514, 613, 614, 713, 714, 813 and 814.

After cutting the liquid crystal display panels, a portion of liquid crystal display panels is turned over to arrange adjacently them such that the cut edges to face one another and, the liquid crystal display are then fixed.

That is, referring to FIG. 7, the liquid crystal display panel 411 which is disposed at the right side among two liquid crystal display panels 311 and 411 right edge portions of which are respectively cut is turned over in a direction of an arrow of (a), and the two liquid crystal display panels 311 and 411 are disposed to be adjacent with one another as shown in (b). Accordingly, the two liquid crystal display panels 311 and 411 are adjacently disposed in a state that the cut edges 313 and 413 face one another, whereby there is no black bezel at a portion where the two liquid crystal display panels 311 and 411 face one another so that display areas of the two liquid crystal display panels 311 and 411 can be disposed more closely.

Meanwhile, referring to FIG. 8, four liquid crystal display panels 511, 611, 711 and 811 right and lower edge portions of which are respectively cut are arranged in a two by two shape, and the liquid crystal display panels 611, 711 and 811 which are disposed at a upper right side, a lower left side and a lower right side are respectively turned over in directions of arrows in (a), and then the four liquid display panels 511, 611, 711 and 811 are disposed to be adjacent with one another as shown in (b). That is, the liquid crystal display panel 511 which is disposed at an upper left side among the four liquid crystal display panels 511, 611, 711 and 811 is disposed without being turned over, the liquid crystal display panel 611 which is disposed at an upper right side is disposed being turned over such that the right cut edge 613 and the lower cut edge 614 are respectively disposed at the left side and the lower side, the liquid crystal display panel 711 which is disposed at a lower left side is disposed being turned over such that the right cut edge 713 and the lower cut edge 714 are respectively disposed at the right side and the upper side, and the liquid crystal display panel 811 which is disposed at a lower right side is disposed being turned over such that the right cut edge 813 and the lower cut edge 814 are respectively disposed at the left side and the upper side. Accordingly, the liquid crystal display panels 511, 611, 711 and 811 are disposed to be adjacent with one another in a state that the cut edges 513, 514, 613, 614, 713, 714, 813 and 814 are disposed to face one another, and thus black bezels 515, 615, 715 and 815 do not exist at areas where edges of the four liquid crystal display panels 511, 611, 711 and 811 face one another, so that display areas of the four liquid crystal display panels 511, 611, 711 and 811 can be disposed more closely.

At this time, the liquid crystal display panels which are adjacently disposed can be fixed by a fixing frame, and the fixing frame can have any structure which can fix the panels. The fixing frame itself is obvious to a person with ordinary skill in the art, so detailed description for the same will be omitted.

Meanwhile, according to a method for manufacturing a multi-display device according to an embodiment of the present invention, polarizers of the liquid crystal display panel which has been turned over are removed, and polarizers which are of the same kind as polarizers originally attached to the opposite side are respectively attached to both sides of the liquid crystal display panel from which the original polarizers have been removed.

That is, referring to FIG. 6, (a) of FIG. 6 shows a cross sectional view of a liquid crystal display panel at least one edge portion of which has been removed through processes of FIG. 1 to FIG. 4, and a polarizer 12 which is not hazed is attached to an outer surface of the lower panel 100 and a hazed polarizer 22 is attached to an outer surface of the upper panel 200.

Polarizers which are attached to both outer surfaces of the turned-over liquid crystal display panel, i.e. an outer surface of the lower panel 100 and an outer surface of the upper panel 200 are removed to become the state of (b) of FIG. 6.

Subsequently, as shown in (c) of FIG. 6, polarizers which are the same kind as those which was originally attached to the opposite surfaces are attached to the surfaces, i.e. an outer surface of the lower panel 100 and an outer surface of the upper panel 200, where the polarizers has been removed. That is, a hazed polarizer 32 is attached to an outer surface of the lower panel 100, and a polarizer 42 which is not hazed is attached to an outer surface of the upper panel 200. By changing the polarizers like this, a hazed polarizer is attached to an upper surface of the turned-over liquid crystal display panel, i.e., a surface which is directly seen by a user, whereby an improved visibility of the turned-over liquid display panel can be achieved.

At this time, in FIG. 6, the polarizers 12 and 22 are removed after cutting the liquid crystal display panel and new polarizers 32 and 42 are attached, but the original polarizers may be removed and new polarizers may be attached before cutting the liquid crystal display panel, and the original polarizers may be removed before cutting the liquid crystal display panel and new polarizers may be attached after cutting the liquid crystal display panel.

By cutting edge portions of the liquid crystal display panels and turning over at least one of the liquid crystal display panels to arrange the liquid crystal display panels such that the cut edges face with one another, gaps between display areas of the neighboring liquid crystal display panels can be substantially reduced, and in addition the polarizers of the turned-over liquid crystal display panel are changed oppositely, whereby the visibility of the turned-over liquid crystal display panel can be enhanced.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Industrial Applicability]

The present invention relates to a method for manufacturing a display device, so it has an industrial applicability.

## Claims

1. A method for manufacturing a multi-display device by arranging adjacently a plurality of liquid crystal display panels, comprising:
cutting the plurality of the liquid crystal display panels along at least one edge to remove portions of the plurality of the liquid crystal display panels respectively;
arranging and fixing the plurality of the liquid crystal display panels, in a state that a portion of the liquid crystal display panels is turned over, such that the cut edges face one another;
removing a polarizer attached to a side of the liquid crystal display panel which will be turned over; and
attaching a polarizer, which is of the same kind as a polarizer originally attached to the opposite side, to the side of the liquid crystal display panel from which the polarizer has been removed.

2. The method of claim 1, wherein in the removing portions of the liquid crystal display panels, the liquid crystal display panel is cut along a right edge or a lower edge of the liquid crystal display panel where a driver for driving the liquid crystal display panel does not exist.

3. The method of claim 2, wherein the plurality of liquid crystal display panels are four,
wherein in the removing portions of the liquid crystal display panel the four liquid crystal display panel are respectively cut along both the right edge and the lower edge,
wherein in the arranging the liquid crystal display panels the four liquid crystal display panels are arranged horizontally and vertically in a two by two type,
and wherein the liquid crystal display panel among the four liquid crystal display panels which is disposed at an upper left side is not turned over, the liquid crystal display panel which is disposed at a upper right side is turned over such that the right cut edge is disposed at a left side, the liquid crystal display panel which is disposed at a lower left side is turned over such that the lower cut edge is disposed at an upper side, and the liquid crystal display panel which is disposed at a lower right side is turned over such that the lower cut edge and the right cut edge are respectively disposed at an upper side and at a left side.
